# EUROPÄISCHE PATENTSCHRIFT

(11) **EP 0 742 063 B1**
(45) Veröffentlichungstag und Bekanntmachung des Hinweises auf die Patenterteilung: **18.03.1998**
(21) Anmeldenummer: 96100337.3
(22) Anmeldetag: 11.01.1996
(51) Int. Cl.: B23B 29/32, B23Q 5/04

(54) **Werkzeugrevolver**
Tool turret
Tourelle porte-outil

(30) Priorität: 09.05.1995 DE 19516985
(43) Veröffentlichungstag der Anmeldung: 13.11.1996
(73) Patentinhaber: Sauter Feinmechanik GmbH, D-72555 Metzingen (DE)
(72) Erfinder: Sahm, Detlef D., D-73262 Reichenbach/Fils (DE); Birk, Kurt, D-72555 Metzingen (DE)
(74) Vertreter: Patentanwälte Bartels und Partner

(56) Entgegenhaltungen:
- DE-A- 2 038 589
- DE-A- 3 630 966
- DE-A- 4 125 003
- DE-C- 3 930 121
- DE-U-29 507 672
- FR-A- 834 468
- PATENT ABSTRACTS OF JAPAN vol. 009, no. 162 (M-394) [1885] , 6.Juli 1985 & JP-A-60 034239 (MIYANO TEKKOSHO KK), 21.Februar 1985,

## Beschreibung

Die Erfindung betrifft einen Werkzeugrevolver, der die Merkmale des Oberbegriffs des Anspruches 1 aufweist.

Bei einem bekannten Werkzeugrevolver dieser Art (DE 39 30 121 C1) ist die Abtriebswelle des Winkelgetriebes nicht nur drehbar, sondern auch längsverschiebbar im Kopf gelagert, damit über sie als Kraftübertragungselement das Kupplungselement betätigt werden kann. Es ist deshalb notwendig, die Abtriebswelle längsverschiebbar mit dem Abtriebszahnrad des Winkelgetriebes zu verbinden, was aufwendig ist. Ferner ist es notwendig, die Abtriebswelle in den diametral zum Kupplungselement liegenden Raum des Kopfes hinein zu dem hier vorgesehenen Antriebsglied zu verlängern, weil zwischen dem Abtriebszahnrad des Winkelgetriebes und dem Kupplungselement kein Platz vorhanden ist, um das Antriebsglied unterzubringen. Hierdurch wird der Aufwand noch weiter erhöht.

Eine derartige, längsverschiebbare Welle ist jedoch dann nicht mehr realisierbar, wenn der Werkzeugrevolver eine konzentrisch zur Werkzeugscheibe angeordnete und mit dem Gehäuse des Werkzeugrevolvers verbundene Hohlsäule aufweist, welche in den Kopf hineinragt. Der Erfindung liegt daher die Aufgabe zugrunde, einen Werkzeugrevolver der eingangs genannten Art zu schaffen, bei dem in konstruktiver einfacher Weise eine Betätigung des Kupplungselementes auch dann möglich ist, wenn die Hohlsäule in den Kopf ragt und der Raum zwischen der Hohlsäule und dem Kupplungselement für ein Antriebsglied nicht ausreicht. Diese Aufgabe löst ein Werkzeugrevolver mit den Merkmalen des Anspruches 1.

Dank des formstabilen Kraftübertragungselementes, welches zur zentralen Längsachse des Kopfes radial versetzt verläuft und deshalb an dem in den Kopf ragenden Ende einer Hohlsäule herbeigeführt werden kann, kann das Antriebsglied diametral zum Kupplungselement angeordnet werden, wo in der Regel genügend Platz für die Unterbringung des Antriebsgliedes vorhanden ist.

Bei einer bevorzugten Ausführungsform sind zwei gleich ausgebildete Kraftübertragungselemente symmetrisch bezüglich der zentralen Längsachse des Kopfes in diesem angeordnet und im Bereich ihrer beiden Enden mit dem Kupplungselement bzw. dem Antriebsglied gekuppelt. Die zu übertragenden Kräfte können dann querkraftfrei übertragen werden, wodurch sowohl vom Antriebsglied als auch vom Kupplungselement Querkräfte ferngehalten werden.

Bei dem Antriebsglied kann es sich beispielsweise um einen Elektromagneten oder um eine Kombination aus einem Elektromagneten und einer Feder handeln. Aber auch ein Zylinder/Kolben-Aggregat ist vor allem dann vorteilhaft, wenn der Werkzeugrevolver an eine Fluidquelle angeschlossen ist.

Sowohl bei Verwendung eines Elektromagneten als auch eines Zylinder/Kolben-Aggregates als Antriebsglied braucht nur eine Längsbewegung des Ankers oder des Kolbens auf das Kupplungselement übertragen zu werden. Als Kraftübertagungselement kann deshalb eine parallel zur Verschieberichtung des Kupplungselementes im Kopf bewegbare Stange vorgesehen sein. Zweckmäßigerweise werden jedoch zwei derartige Stangen vorgesehen, die symmetrisch bezüglich der im Kopf gelagerten Welle angeordnet sind und an ihrem dem Kupplungselement abgewandten Ende über ein Joch mit dem Antriebsglied verbunden sind.

Der Antrieb des Kupplungselementes kann aber auch mittels des Verriegelungsgliedes oder des dieses verschiebenden Betätigungsgliedes erfolgen, die beide im Gehäuse des Werkzeugrevolvers in Längsrichtung der Drehachse der Werkzeugscheibe verschiebbar sind, um die Werkzeugscheibe in den wählbaren Schaltstellungen formschlüssig mit dem Gehäuse des Werkzeugsrevolvers zu verriegeln und für eine Weiterschaltung der Werkzeugscheibe diese vorübergehend freizugeben.

Bei einem derartigen Antrieb des Kupplungselementes weist das Antriebsglied wenigstens einen im Kopf gelagerten Schwenkhebel auf, dessen einer Arm am Kupplungselement angreift und dessen anderer Arm über eine Mechanik mit dem Verriegelungsglied oder dem dieses verschiebenden Betätigungsgliedes gekuppelt ist.

Zweckmäßigerweise weist diese Mechanik wenigstens einen Stößel zur Übertragung der Antriebskraft auf den Schwenkhebel auf.

Bei einer bevorzugten Ausführungsform sind zwei gleich ausgebildete und gleichachsig angeordnete Doppelarmschwenkhebel vorgesehen, welche die zur Drehachse der Werkzeugscheibe parallele Bewegung der ihnen zugeordneten Stößel in eine radiale Verschiebebewegung des Kupplungselementes umwandeln.

Da die Kraftübertragungselemente unabhängig davon, ob es sich um Stangen oder um Schwenkhebel handelt, vorteilhafterweise in radialem Abstand von der Längsachse des Kupplungselementes an diesem angreifen, weist bei einer bevorzugten Ausführungsform das Kupplungselement ein in radialer Richtung von der Längsachse des Kupplungselementes abstehendes Krafteinleitungselement auf, das beispielsweise als eine das Kupplungselement aufnehmende Glocke ausgebildet sein kann, an deren ringförmiger Stirnseite das Kraftübertragungselement oder die Kraftübertragungselemente anliegen.

Im folgenden ist die Erfindung an Hand von in der Zeichnung dargestellten Ausführungsbeispielen im einzelnen erläutert. Es zeigen
- Fig. 1: einen schematisch dargestellten Längsschnitt eines ersten Ausführungsbeispiels,
- Fig. 2: eine Draufsicht in Längsrichtung der Drehachse der Werkzeugscheibe auf das Winkelgetriebe, die diese im Abstand umgreifenden Kraftübertragungselemente sowie das Antriebsglied und eine die Antriebskraft in das Kupplungselemente einleitende Glocke,
- Fig. 3: einen schematisch dargestellten Teilschnitt durch den Kopf eines zweiten Ausführungsbeispiels,
- Fig. 4: eine Ansicht entsprechend Fig. 2 des zweiten Ausführungsbeispiels,
- Fig. 5: eine unvollständig dargestellte Seitenansicht der Kraftübertragungseinrichtung des zweiten Ausführungsbeispiels.

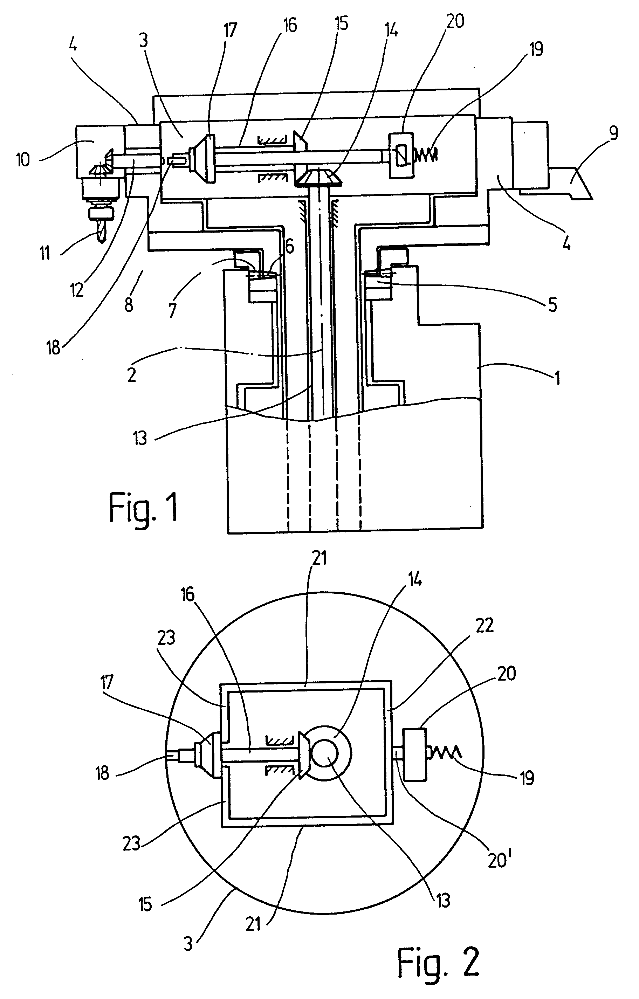

Ein Gehäuse 1 eines Werkzeugrevolvers definiert eine Längsachse 2, mit der die Längsachse eines zylindrischen Kopfes 3 fluchtet, welcher sich an das eine gehäuseseitige Ende einer Werkzeugscheibe 4 anschließt und mit dem Gehäuse 1 drehfest verbunden ist. Die Werkzeugscheibe 4 umfaßt den Kopf 3 und ist um die Längsachse 2 drehbar gelagert. In vorbestimmten Winkelstellungen ist die Werkzeugscheibe 4 mit dem Gehäuse 1 verriegelbar. Die hierfür vorgesehene und nur in Fig. 1 dargestellte Verriegelungseinrichtung weist ein ringförmiges, in Richtung der Längsachse 2 verschiebbares Verriegelungsglied 5 auf, dessen auf der dem Kopf 3 zugewandten Stirnseite vorgesehene Stirnverzahnung in der Verriegelungsstellung gleichzeitig in zwei konzentrische Stirnverzahnungen 6 und 7 eingreift, welche am Gehäuse 1 bzw. einem drehfest mit der Werkzeugscheibe 4 verbundenen Bauteil 8 vorgesehen sind.

Die Werkzeugscheibe 4 ist mit einer der Anzahl ihrer wählbaren Schaltstellungen entsprechenden Anzahl von Aufnahmen für Werkzeuge versehen. Als Beispiel für ein stillstehendes Werkzeug ist in Fig. 1 ein Drehmeißel 9 dargestellt. Zumindest ein Teil der Werkzeugaufnahmen ist für die Aufnahme von angetriebenen Werkzeugen ausgebildet. Als Beispiel für ein solches Werkzeug ist in Fig. 1 ein Spindelkopf 10 mit einem Bohrer 11 dargestellt. Die Antriebsspindel 12 des Spindelkopfes 10 greift in die Werkzeugaufnahme ein und ist, wenn sich diese Werkzeugaufnahme in der Arbeitsposition befindet, mit einem nicht dargestellten Antriebsmotor gekuppelt.

Für den Antrieb der Antriebsspindel 12 ist im Gehäuse 1 in dessen Längsachse 2 liegend eine Zwischenwelle 13 drehbar gelagert, deren nicht dargestelltes Ende mit dem Antriebsmotor ständig oder nur während des Gebrauchs des Spindelkopfes 10 gekuppelt. Die Zwischenwelle 13 erstreckt sich, wie Fig. 1 zeigt, in den Kopf 3 hinein und trägt an diesem Ende ein mit ihr fest verbundenes Zahnrad 14 eines Winkelgetriebes, das im Ausführungsbeispiel als Kegelgetriebe ausgebildet ist. Mit diesem Zahnrad 14 kämmt ein zweites Zahnrad 15, das fest auf dem einen Ende einer Antriebswelle 16 angeordnet ist, die in radialer Richtung verlaufend im Kopf 3 drehbar und axial unverschiebbar gelagert ist, und zwar derart, daß sie mit der Antriebsspindel 12 fluchtet, wenn das zugehörige Werkzeug, im Ausführungsbeispiel also der Spindelkopf 10, sich in der Arbeitsposition befindet.

Auf der Antriebswelle 16 ist längsverschiebbar und drehfest zum Kopf 3 ein Kupplungsbetätigungsglied 17 angeordnet, mittels dessen eine Kupplungswelle 18 axial verschiebbar ist, die mit der Abtriebswelle 16 fluchtet und mit ihr drehfest, aber axial verschiebbar, verbunden ist. Diese Kupplungswelle 18 kann durch eine Verschiebung radial nach außen mit der Antriebsspindel 12 drehfest gekuppelt und soweit zurückgezogen werden, daß die Antriebsspindel 12 abgekuppelt ist und die Werkzeugscheibe 4 relativ zum Kopf 3 gedreht werden kann.

Die Verschiebung der Kupplungswelle 18 in diejenige Position, in welcher sie mit der Antriebsspindel 12 gekuppelt ist, erfolgt im Ausführungsbeispiel entgegen der Kraft einer Druckfeder 19 mittels eines Elektromagneten 20, der, wie die Fig. 1 und 2 zeigen, im Kopf 3 an einer diametral zum Kupplungsbetätigungsglied 17 liegenden Stelle angeordnet ist. Das aus den Zahnrädern 14 und 15 bestehende Winkelgetriebe liegt also zwischen dem Elektromagneten 20 und dem Kupplungsbetätigungsglied 17. Der Grund für diese Anordnung besteht darin, daß in der Regel, anders als in den Fig. 1 und 2 dargestellt, zwischen dem aus den Zahnrädern 14 und 15 bestehenden Getriebe einerseits sowie dem Kupplungsbetätigungsglied 17 andererseits kein Raum für eine das Kupplungsbetätigungsglied 17 verschiebende Antriebsvorrichtung vorhanden ist, unabhängig davon, ob man als Antriebsvorrichtung einen Elektromagneten vorsieht oder ein Zylinder/Kolben-Aggregat. Hingegen ist in dem bezüglich des Getriebes diametral zum Kupplungsbetätigungsglied 17 liegenden Teil des Kopfes 3 stets ausreichend Platz vorhanden, um einen Elektromagneten und, wie im Ausführungsbeispiel, eine Druckfeder 19 unterbringen zu können. Die Druckfeder 19 kann auch zwischen dem Kupplungsbetätigungsglied 17 und der Kupplungswelle 18 angeordnet sein. Auch für ein Zylinder-Kolben-Aggregat, das bei einer nicht dargestellten Ausführungsform statt des Elektromagneten 20 und der Druckfeder 19 vorgesehen ist, ist hier ausreichend Platz vorhanden.

Die Kraftübertragung vom Elektromagneten 20 und der Druckfeder 19 auf das Kupplungsbetätigungsglied 17 erfolgt, wie die Fig. 1 und 2 zeigen, mit Hilfe von zwei in der gleichen Radialebene des Kopfes 3 wie die Abtriebswelle 16 liegenden und symmetrisch zu letzterer angeordneten, formstabilen Schub-und Zugstangen 21, die im Bereich ihres einen Ende mit dem Kupplungsbetätigungsglied 17 und im Bereich ihres anderen Endes mit dem in Längsrichtung der Antriebswelle 16 verschiebbaren Anker 20' des Elektromagneten 20 verbunden sind. Im Ausführungsbeispiel ist für die Verbindung mit dem Anker 20' ein Joch 22 vorgesehen, für die Verbindung mit dem Kupplungsglied 17 die gegeneinander weisenden Endabschnitte 23 der Schub- und Zugstangen 21.

Die beiden Schub- und Zugstangen 21 ermöglichen nicht nur eine querkraftfreie Übertragung der Betätigungskräfte vom Elektromagneten 20 und der Druckfeder 19 auf das Kupplungsbetätigungsglied 17. Vor allem erlaubt es der Abstand der Schub- und Zugstangen 21 von dem aus den Zahnrädern 14 und 15 betstehenden Getriebe und der Antriebswelle 16, eine die Zwischenwelle 13 enthaltende hohle Säule, welche relativ zum Gehäuse 1 axial unbeweglich in diesem angeordnet ist, in den Kopf 3 hineinragen zu lassen, weil die Schub-und Zugstangen 21 auch eine solche hohle Säule umgreifen können.

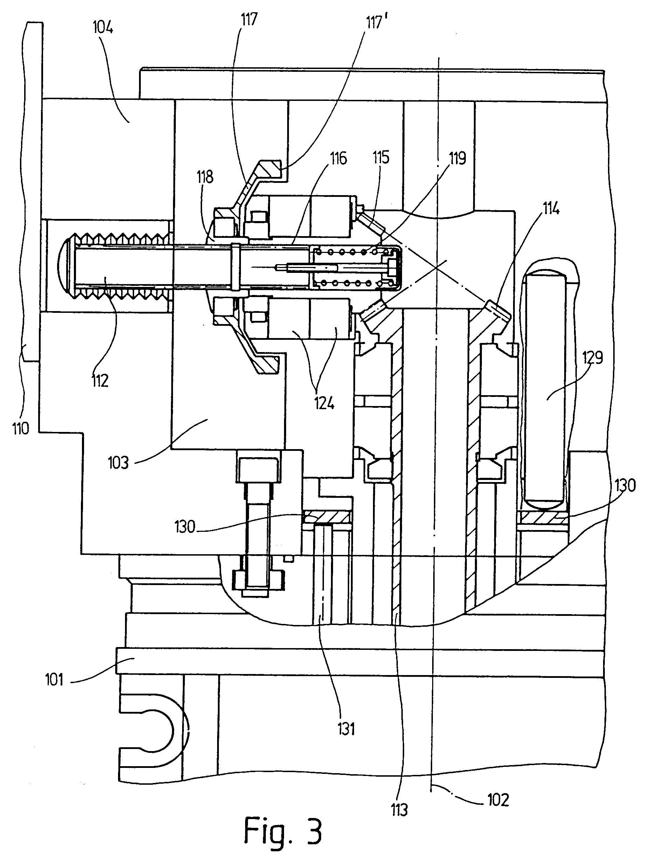

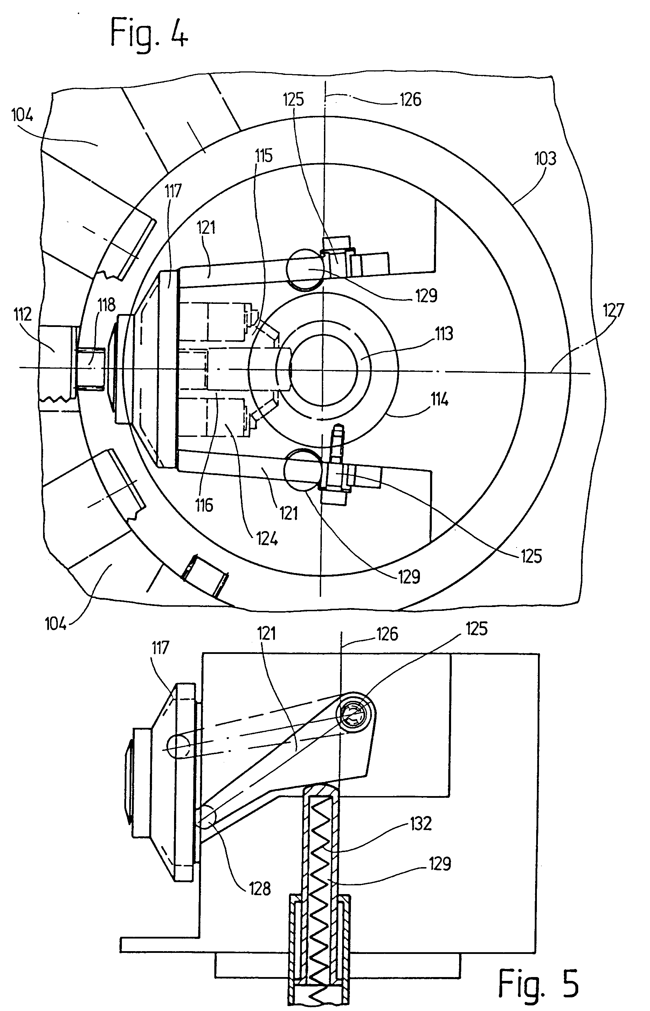

Das in den Fig. 3 und 4 dargestellte Ausführungsbeispiel unterscheidet sich von demjenigen gemäß den Fig. 1 und 2 im wesentlichen nur durch einen anderen Antrieb für das Kupplungsbetätigungsglied 117. Entsprechende Teile sind deshalb mit um 100 größeren Bezugszahlen gekennzeichnet.

Wie bei dem Ausführungsbeispiel gemäßt den Fig. 1 und 2 schließt an das nur teilweise dargestellte Gehäuse 101 gleichachsig zu dessen Längsachse 102 der zylindrische Kopf 103 an, den die in vorgebenen Winkelstellungen mit dem Gehäuse 101 verriegelbare Werkzeugscheibe 104 umfaßt.

In den Kopf 103 hinein ragt eine in der Längsachse 102 liegende Zwischenwelle 113, die von einem nicht dargestellten Motor antreibbar ist und auf dem im Kopf 103 liegenden Ende ein Kegelrad 114 trägt, mit dem ein zweites Kegelrad 115 kämmt. Letzteres ist fest mit einer Antriebswelle 116 verbunden, die sich in radialer Richtung bezüglich der Längsachse 102 erstreckt und mittels Wälzlager 124 im Kopf 103 gelagert ist. Fig. 3 läßt deutlich erkennen, daß in dem die Wälzlager 124 aufnehmenden Bereich des Kopfes 103 kein Raum vorhanden ist für eine Antriebsvorrichtung, mittels deren ein Kupplungsbetätigungsglied 117 verschiebbar ist, mittels dessen Hilfe eine Kupplungswelle 118 mit der Antriebsspindel 112 eines anzutreibenden Werkzeuges kuppelbar ist. Die Verschiebung des Kupplungsbetätigungsgliedes 117 entgegen der Kraft einer Druckfeder 119 gegen die Antriebsspindel 112 hin erfolgt, wie Fig. 5 zeigt, mit Hilfe von zwei gleich ausgebildeten Schwenkhebeln 121. Diese Schwenkhebel 121 sind im Bereich ihres einen Endes schwenkbar im Kopf 103 auf je einem Lagerzapfen 125 gelagert. Wie die Fig. 4 und 5 zeigen, sind die Lagerzapfen 125 nahe der Längsmittelebene 126 des Kopfes 103 auf der dem Kupplungsbetätigungsglied 117 abgekehrten Seite angeordnet, und zwar symmetrisch zu der durch die Antriebswelle 116 und die Längsachse 102 definierten Ebene 127. Der Abstand von der Ebene 127 ist so groß gewählt, daß zwischen den Schwenkhebeln 121 Raum ist für das Winkelgetriebe und das gegebenenfalls in den Kopf 103 hineinragende Ende einer die Zwischenwelle 113 enthaltenden hohlen Säule. Wie Fig. 5 zeigt, sind die Lagerzapfen 125 gegenüber der die Antriebswelle 116 enthaltenden Querebene des Kopfes 103 gegen dessen vom Gehäuse 101 abgewandte Stirnseite hin versetzt. Hierdurch wird erreicht, daß die beiden Schwenkhebel 121, welche sich vom jeweiligen Lagerzapfen 125 gegen das Kupplungsbetätigungsglied 117 erstrecken, mit der Verschieberichtung des Kupplungsbetätigungsgliedes 117 einen spitzen Winkel einschließen.

Das Kupplungsbetätigungsglied hat, wie Fig. 3 zeigt, die Form einer Glocke, an deren Stirnfläche 117' die beiden Rollen 128 an liegen, welche am freien Ende der beiden Schwenkhebel 121 vorgesehen sind. Die Stirnfläche 117' ist so groß gewählt, daß die beiden Schwenkhebel 121 an den Wälzlagern 124 vorbeigeführt werden.

Werden die beiden Schwenkhebel 121 aus der in Fig. 5 mit ausgezogenen Linien dargestellten Schwenklage, in welcher sie mit der Verschieberichtung des Kupplungsbetätitungsgliedes 117 einen Winkel von etwa 45° einschließen, in die mit strichpunktierter Linie dargestellte Schwenklage bewegt, in welcher der Winkel nur noch etwa 10° beträgt, dann wird das Kupplungsbetätigungsglied 117 von der Längsachse 102 weg, also gegen die Antriebsspindel 112 des über die Abtriebswelle 116 anzutreibenden Werkzeuges verschoben. Dabei wird die Kupplungswelle 118 mit der Antriebsspindel 112 drehfest gekuppelt.

Die beiden Schwenkhebel 121 werden im Uhrzeigersinn bei einer Blickrichtung gemäß Fig. 5 mittels je eines Stößels 129 geschwenkt, der parallel zur Längsachse 102 im Kopf 103 längsverschiebbar gelagert ist und mit seinem einen Ende im Abstand vom Lagerzapfen 125 am Schwenkhebel 121 anliegt. In Fig. 3 ist einer der beiden Stößel 129 aus Gründen der Übersichtlichkeit in einer winkelversetzten Lage dargestellt. Die tatsächliche Lage der beiden Stößel 129 zeigen die Fig. 4 und 5. Zur Begrenzung der Betätigungskräfte sind die Stößel 129 teleskopartig zweigeteilt und durch eine Druckfeder 132 verspannt. Die Stößel 129 sind parallel zu der Längsmittelebene 126 und symmetrisch bezüglich der Ebene 127 angeordnet. Ihr dem Schwenkhebel 121 abgekehrtes Ende liegt an einem zur Längsachse 102 konzentrisch angeordneten Ring 103 an, der in Richtung der Längsachse 102 verschiebbar im Kopf 103 gelagert ist, wie Fig. 3 zeigt. Der Ring 130 wird von drei gleich ausgebildeten und in gleichem Abstand von der Längsachse 102 angeordneten sowie je um 120° gegeneinander versetzten Bolzen 131 getragen, die im Ausführungsbeispiel mit dem Verriegelungsglied 5 verbunden sind.

Wenn nach einer Drehbewegung der Werkzeugscheibe 104 diese wieder mittels des Verriegelungsgliedes mit dem Gehäuse 101 verriegelt wird, werden die Bolzen 131, der Ring 130 und die Stößel 129 gegen die dem Gehäuse 101 abgewandte Stirnseite des Kopfes 103 verschoben. Diese Verschiebung hat zur Folge, daß die beiden Schwenkhebel 121 in Uhrzeigersinn bei einer Blickrichtung gemäß Fig. 5 geschwenkt werden, wodurch die Kupplungswelle 118 mit der Spindel 112 gekuppelt wird. Sollte dabei die Verzahnung der Kupplungswelle 118 auf die Verzahnung der Antriebsspindel 112 treffen, was eine durch einen Sensor erfaßbare unzureichende Verschiebung des Kupplungsbetätigungsgliedes 117 zur Folge hätte, wird das Verriegelungsglied wieder in die Entriegelungsstellung zurückbewegt und die Kupplungswelle 118 durch eine Drehung der Zwischenwelle 113 geringfügig verdreht. Danach wird erneut die Verriegelung der Werkzeugscheibe 104 und die Kupplung der Kupplungswelle 118 mit der Antriebsspindel 112 eingeleitet. Sollte auch jetzt ein Kuppeln nicht möglich sein, wird der gleiche Vorgang wiederholt. In gleicher Weise wird auch bei dem Ausführungsbeispiel gemäß den Fig. 1 und 2 vorgegangen, wenn dort zunächst die Verzahnung der Kupplungswelle 18 auf die Verzahnung der Antriebsspindel 12 treffen sollte.

## Patentansprüche

1. Werkzeugrevolver mit
a) einem Gehäuse,
b) einem mit dem Gehäuse drehfest verbundenen Kopf,
c) einer konzentrisch zu diesem Kopf angeordneten und ihn umfassenden Werkzeugscheibe, die relativ zum Gehäuse und zum Kopf um deren Längsachse drehbar und in vorbestimmten Winkelpositionen mit dem Gehäuse verriegelbar ist sowie wenigstens eine Aufnahme für ein anzutreibendes Werkzeug aufweist,
d) einer im Kopf drehbar gelagerten und sich in radialer Richtung bezüglich dessen zentraler Längsachse erstreckenden Welle, die über ein Winkelgetriebe und eine in der Drehachse der Werkzeugscheibe liegende Zwischenwelle mittels eines Motors antreibbar und mittels eines in Längsrichtung dieser Welle bewegbaren Kupplungselementes mit der Antriebsspindel eines sich in der Arbeitsposition befindenden Werkzeuges kuppelbar ist, und
e) einem Antriebsglied für das Kupplungselement, das zu letzterem in diametraler Lage bezüglich der zentralen Längsachse des Kopfes in diesem angeordnet und über eine mechanische Kraftübertragungseinrichtung mit dem Kupplungselement verbunden ist,
dadurch gekennzeichnet, daß die mechanische Kraftübertragungseinrichtung wenigestens ein zur zentralen Längsachse (2; 102) des Kopfes (3; 103) radial versetzt verlaufendes, formstabiles Kraftübertragungselement (21; 121) aufweist.

2. Werkzeugrevolver nach Anspruch 1, dadurch gekennzeichnet, daß, zwei gleich ausgebildete Kraftübertragungselemente (21; 121) symmetrisch bezüglich der im Kopf drehbar gelagerten Welle (16; 116) und symmefrisch bezüglich der zentralen Längsachse (2; 102) des Kopfes (3; 103) in diesem angeordnet und im Bereich ihrer beiden Enden zumindest indirekt mit der Kupplungswelle (18; 118) bzw. dem Antriebsglied (20, 20'; 129) gekuppelt sind.

3. Werkzeugrevolver nach Anspruch 1 oder 2, dadurch gekennzeichnet, daß das Antriebsglied ein Elektromagnet (20, 20') ist.

4. Werkzeugrevolver nach Anspruch 1 oder 2, dadurch gekennzeichnet, daß das Antriebsglied ein Zylinder-Kolben-Aggregat ist.

5. Werkzeugrevolver nach einem der Ansprüche 2 bis 4, dadurch gekennzeichnet, daß jedes vorhandene Kraftübertragungselement als eine parallel zur Verschieberichtung der Kupplungswelle (18) im Kopf (3) bewegbare Stange (21) ausgebildet ist.

6. Werkzeugrevolver nach Anspruch 5, dadurch gekennzeichnet, daß zwei Stangen (21) vorgesehen sind, die symmetrisch bezüglich der im Kopf (3) gelagerten Welle (16) angeordnet sind und an ihrem dem Kupplungselement (18) abgewandten Ende über ein Joch (22) mit dem Antriebsglied (19, 20, 20') verbunden sind.

7. Werkzeugrevolver nach Anspruch 1 oder 2, dadurch gekennzeichnet, daß das Antriebsglied wenigstens einen im Kopf (103) gelagerten Schwenkhebel (121) aufweist, dessen einer Arm am Kupplungselement (117, 118) angreift und dessen anderer Arm (129, 130, 131) mit einem Bauteil der Verriegelungseinrichtung für die Werkzeugscheibe gekuppelt ist.

8. Werkzeugrevolver nach Anspruch 7, dadurch gekennzeichnet, daß die den Schenkhebel (121) betätigende Mechanik wenigstens einen am Schwenkhebel (121) angreifenden Stößel (129) aufweist.

9. Werkzeugrevolver nach Anspruch 8, dadurch gekennzeichnet, daß das Antriebsglied zwei gleich ausgebildete, doppelarmige Schwenkhebel (121) und zwei gleich ausgebildete Stößel (129) aufweist, welche gemeinsam die Bewegung des Bauteils der Verriegelungseinrichtung auf die Schwenkhebel (121) übertragen.

10. Werkzeugrevolver nach einem der Ansprüche 1 bis 9, dadurch gekennzeichnet, daß das Kupplungselement (18; 118) ein Kupplungsbetätigungsglied (17; 117) aufweist, an dem jedes vorhandene Kraftübertragungselement (21; 121) angreift.

11. Werkzeugrevolver nach Anspruch 10, dadurch gekennzeichnet, daß das Kupplungsbetätigungsglied (17; 117) als eine Glocke ausgebildet ist, an deren ringförmiger Stirnseite jedes vorhandene Kraftübertragungselement (21; 121) anliegt.

12. Werkzeugrevolver nach Anspruch 8, dadurch gekennzeichnet, daß die Stößel (129) die Betätigungskräfte des Schwenkhebels (121) begrenzen.

## Claims

1. Tool turret with
a) a housing,
b) a head non-rotatably connected to the housing,
c) a tool disc arranged concentrically with respect to this head and surrounding the latter, which disc is able to rotate about its longitudinal axis relative to the housing and to the head and can be locked in predetermined angular positions to the housing and comprises at least one holder for a tool to be driven,
d) a shaft mounted to rotate in the head and extending in the radial direction with regard to its central longitudinal axis, which shaft can be driven by way of miter-wheel gearing and an intermediate shaft located on the axis of rotation of the tool disc, by means of a motor and can be connected by means of a coupling member, able to move in the longitudinal direction of the shaft, to the drive spindle of a tool located in the working position, and
e) a drive member for the coupling member, which at the latter, in a diametral position with respect to the central longitudinal axis of the head, is located in the latter and is connected to the coupling member by way of a mechanical power-transmission device,
characterised in that the mechanical power-transmission device comprises at least one inherently stable power-transmission member (21; 121) extending in a radially offset manner with respect to the central longitudinal axis (2; 102) of the head (3; 103).

2. Tool turret according to Claim 1, characterised in that two power-transmission members (21; 121) having an identical construction are arranged symmetrically with respect to the shaft (16; 116) mounted to rotate in the head and symmetrically with respect to the central longitudinal axis (2; 102) of the head (3; 103), in the latter and in the region of their two ends are connected at least indirectly to the coupling shaft (18; 118) or the drive member (20, 20'; 129).

3. Tool turret according to Claim 1 or 2, characterised in that the drive member is a solenoid (20, 20').

4. Tool turret according to Claim 1 or 2, characterised in that the drive member is a piston/cylinder unit.

5. Tool turret according to one of Claims 2 to 4, characterised in that each existing power-transmission member is constructed as a rod (21) movable parallel to the displacement direction of the coupling shaft (18) in the head (3).

6. Tool turret according to Claim 5, characterised in that two rods (21) are provided, which are arranged symmetrically with respect to the shaft (16) mounted in the head (3) and at their end remote from the coupling member (18) are connected by way of a cross-bar (22) to the drive member (19, 20, 20').

7. Tool turret according to Claim 1 or 2, characterised in that the drive member comprises at least one rocking lever (121) mounted in the head (103), whereof one arm acts on the coupling member (117, 118) and whereof the other arm (129, 130, 131) is connected to a component of the locking device for the tool disc.

8. Tool turret according to Claim 7, characterised in that the mechanism actuating the rocking lever (121) comprises at least one plunger (129) acting on the rocking lever (121).

9. Tool turret according to Claim 8, characterised in that the drive member comprises two identically constructed, double-armed rocking levers (121) and two identically constructed plungers (129), which jointly transmit the movement of the component of the locking device to the rocking lever (121).

10. Tool turret according to one of Claims 1 to 9, characterised in that the coupling member (18; 118) comprises a coupling-actuating member (17; 117), on which each existing power-transmission member (21; 121) acts.

11. Tool turret according to Claim 10, characterised in that the coupling-actuating member (17; 117) is constructed as a bell, against the annular end face of which each existing power-transmission member (21; 121) bears.

12. Tool turret according to Claim 8, characterised in that the plungers (129) define the actuating forces of the rocker lever (121).

## Revendications

1. Tourelle porte-outil équipée :
a) d'un carter
b) d'une tête reliée au carter de manière résistante à la torsion,
c) d'un plateau porte-outil concentrique par rapport à cette tête et l'entourant, qui peut tourner par rapport au carter et à la tête autour de son axe longitudinal et peut être verrouillé dans des positions angulaires prédéfinies avec le carter et présente au moins un logement pour un outil à entraîner,
d) d'un arbre logé de façon pivotante dans la tête et s'étendant dans le sens radial par rapport à son axe longitudinal central, qui peut être entraîné au moyen d'un moteur par l'intermédiaire d'un engrenage angulaire et d'un arbre intermédiaire situé dans l'axe de rotation du plateau porte-outil et peut être couplé au moyen d'un élément d'accouplement mobile dans le sens longitudinal de cet arbre avec la broche d'entraînement d'un outil se trouvant dans la position de travail,
e) et d'un organe d'entraînement pour l'élément d'accouplement qui, par rapport à celui-ci, est disposé dans une position diamétralement opposée par rapport à l'axe longitudinal central de la tête dans celle-ci et est relié par un dispositif mécanique de transmission de force à l'élément d'accouplement.
caractérisée en ce que le dispositif mécanique de transmission de forcer présente au moins un élément de transmission de force (21; 121) décalé radialement par rapport à l'axe longitudinal (2; 102) central de la tête (3; 103) et indéformable.

2. Tourelle porte-outil selon la revendication 1, caractérisée en ce que deux éléments de transmission de force (21; 121) de même conception sont disposés de façon symétrique par rapport à l'arbre (16; 116) logé de façon pivotante dans la tête et de façon symétrique par rapport à l'axe longitudinal (2; 102) central de la tête (3; 103) dans celle-ci et sont accouplés dans la zone de leurs extrémités au moins indirectement avec l'arbre d'accouplement (18; 118) ou l'organe d'entraînement (0, 20'; ,129).

3. Tourelle porte-outil selon la revendication 1 ou 2, caractérisée ce que l'organe d'entraînement est un électroaimant (20, 20').

4. Tourelle porte-outil selon la revendication 1 ou 2, caractérisée en ce que l'organe d'entraînement est un ensemble cylindre-piston.

5. Tourelle porte-outil selon l'une quelconque des revendications 2 à 4, caractérisée en ce que chaque élément de transmission de force existant est conçu comme une tige (21) mobile dans la tête (3) et parallèle au sens de déplacement de l'arbre d'accouplement (18).

6. Tourelle porte-outil selon la revendication 5, caractérisée en ce qu'il est prévu deux tiges (21) qui sont disposées de façon symétrique par rapport à l'arbre (16) logé dans la tête et sont reliés sur l'extrémité opposée à l'élément d'accouplement (18) par un joug (22) à l'organe d'entraînement.

7. Tourelle porte-outil selon la revendication 1 ou 2, caractérisée en ce que l'organe d'entraînement présente au moins un levier basculant (121) logé dans la tête (103), dont un bras s'appuie sur l'élément d'accouplement (117, 118) et dont 'l'autre bras (129, 130, 131) est accouplé avec un composant du dispositif de verrouillage pour le plateau porte-outil.

8. Tourelle porte-outil selon la revendication 7, caractérisée, ce que le mécanisme actionnant le levier pivotant (121) présente au moins un coulisseau (129) appliqué au moins sur le levier basculant (121).

9. Tourelle porte-outil selon la revendication 8, caractérisée en ce que l'organe d'entraînement présente deux leviers pivotants (121) à double bras et de même conception et deux coulisseaux (129) de même conception, qui transmettent conjointement le mouvement du composant du dispositif de verrouillage aux leviers basculants (121).

10. Tourelle porte-outil selon l'une quelconque des revendications 1 à 9, caractérisée en ce que l'organe d'accouplement (18; 118) présente un organe de commande d'accouplement 17; 117) sur lequel s'applique chaque élément de transmission de force (21; 121) existant.

11. Tourelle porte-outil selon la revendication 10, caractérisée en ce que l'organe de commande d'accouplement (17; 117) est conçu comme une cloche sur la face avant de laquelle s'appuie chaque élément de transmission de force (21; 121) existant.

12. Tourelle porte-outil selon la revendication 8, caractérisée en ce que les coulisseaux (129) limitent les forces de commande du levier basculant (121).
